Europäisches Patentamt

European Patent Office

Office européen des brevets

(19)

(11) Numéro de publication : **0 505 237 A1**

## (12) DEMANDE DE BREVET EUROPEEN

(21) Numéro de dépôt : **92400627.3**

(22) Date de dépôt : **11.03.92**

(51) Int. Cl.⁵ : **B60Q 1/14**, B60Q 1/52

(30) Priorité : **22.03.91 FR 9103484**

(43) Date de publication de la demande :
**23.09.92 Bulletin 92/39**

(84) Etats contractants désignés :
**DE ES FR GB**

(71) Demandeur : **REGIE NATIONALE DES USINES RENAULT S.A.**
**34, Quai du Point du Jour**
**F-92109 Boulogne Billancourt (FR)**

(72) Inventeur : **Nguyen, Hoang Giang**
**9, rue de Belfort**
**F-91130 Ris Orangis (FR)**

(54) **Procédé et dispositif d'amélioration de la vision automobile de nuit.**

(57)   Procédé d'amélioration de la vision automobile de nuit consistant à éclairer la route et les objets qui s'y trouvent à l'aide de deux projecteurs longue portée (3, 4) émettant des rayons lumineux de longueurs d'ondes déterminées, et à capter une image de la chaussée éclairée par ces rayons au moyen d'un système de prise de vue, caractérisé en ce que les deux projecteurs (3, 4) éclairent respectivement dans les domaines du proche infrarouge et de l'ultraviolet, en ce que la prise de vue est également effectuée à l'intérieur de bandes spectrales couvrant le proche infrarouge et l'ultraviolet, et en ce que l'image de nuit combinée résultant de cette double prise de vue est restituée au conducteur dans ou à proximité de son champ de vision habituel de conduite.

FIG.1

EP 0 505 237 A1

La présente invention se rapporte au domaine technique de l'éclairage nocturne de la chaussée par les véhicules automobiles. Elle vise à améliorer la vision de chaque conducteur en conduite de nuit, sans gêner les autres usagers.

On sait que même dans des conditions météorologiques normales, c'est-à-dire des conditions de visibilité nocturne optimales, la portée réduite des projecteurs de croisement (environ 30 m) est à l'origine d'une part importante des accidents automobiles survenant la nuit. Etant donné qu'il est inconcevable d'augmenter la portée des feux de croisement, ou de conseiller aux automobilistes de conserver en permanence leurs feux de route, les constructeurs ont cherché à réaliser des ensembles d'éclairage susceptibles d'améliorer la vison nocturne en feux de croisement, sans éblouir les autres conducteurs.

Une première solution, développée sur certains dispositifs connus, consiste à éclairer la chaussée avec des rayons ultraviolets. Cette solution est illustrée notamment par la publication FR 2.648.541, qui se rapporte à un projecteur améliorant l'éclairement des panneaux de signalisation grâce à l'émission de rayons ultraviolets sur une grande portée. Selon ce type de dispositif, les longueurs d'onde inférieures à 300 nm, dangereuses pour l'homme, sont heureusement arrêtées naturellement par le verre des projecteurs. Les rayons ultraviolets peuvent par exemple être produits par des lampes à vapeur de mercure ionisée grâce à des arcs électriques créés par un dispositif d'allumage de "type balast". Ces rayons rencontrent notamment la chaussée, les bandes de signalisation horizontales, les panneaux, les piétons, etc... En fonction de la nature des objets rencontrés, un glissement de longueur d'onde réfléchie à environ 500 nm permet à l'oeil humain de voir les objets éclairés sous ultraviolets. Ce phénomène est spectaculaire dans le cas où les objets comportent une couche de peinture fluorescente.

Malheureusement, l'infrastructure ou la signalisation routière ne comportent pas toujours de surfaces réfléchissantes. De plus, l'éclairage par ultraviolets n'est efficace que vis-à-vis d'un nombre limité d'objets : lignes blanches de signalisation horizontale, panneaux de signalisation fluorescents... Concernant les piétons, des expériences ont mis en évidence que certains vêtements, les vêtements en cuir par exemple, réfléchissent mieux les ultraviolets que les vêtements en coton, tels que des pantalons en tissu "jeans". La portée de vision directe obtenue avec ce type d'éclairage, est actuellement de l'ordre de 50 m.

Une seconde solution, exploitable en vue d'améliorer la vision nocturne des conducteurs, réside dans l'utilisation d'éclairage impulsionnel du type flash, associé à une reprise d'image par une caméra CCD ("charge coupled device", en français "dispositif à transfert de charges"). Les éclairs peuvent par exemple être obtenus au moyen d'un laser à impulsions. En jouant sur le temps d'intégration de la caméra CCD, on peut reconstituer une image correspondant à une scène située à une certaine distance de celle-ci.

Le balayage de la chaussée par un faisceau laser de longueur d'onde 900 nm (proche infrarouge), combiné à une reprise d'image par une caméra CCD sensible dans le domaine du proche infrarouge, offre un autre type de solution au problème de la vision de nuit.

On connaît encore d'autres systèmes pouvant être mis en oeuvre sur un véhicule pour améliorer ou compléter la vision de nuit. Le système d'éclairage et de visualisation pour véhicule, faisant l'objet du dépôt de brevet n° 90-04195 de la demanderesse, non publié à ce jour, consiste notamment à éclairer la route par un faisceau longue portée dans le domaine du proche infrarouge. L'image de la chaussée est alors reprise par une caméra CCD, sensible dans le proche infrarouge.

Les dispositifs connus ne procurant qu'une amélioration limitée de la vision de nuit, notamment en raison de la nature variée des objets éclairés, l'invention propose un procédé et des dispositifs spécialement conçus pour sa mise en oeuvre, résolvant de façon simple l'ensemble des problèmes évoqués.

L'invention concerne un procédé d'amélioration de la vision automobile de nuit consistant à éclairer la route et les objets qui s'y trouvent, à l'aide de deux projecteurs émettant des rayons lumineux de longueur d'ondes déterminés, et à capter une image de la chaussée éclairée par ces rayons, au moyen d'un système de prise de vue. Ce procédé est caractérisé en ce que les deux projecteurs longue portée éclairent respectivement dans les domaines du proche infrarouge et de l'ultraviolet, en ce que la prise de vue est également effectuée à l'intérieur de bandes spectrales couvrant le proche infrarouge et l'ultraviolet, et en ce que l'image de nuit combinée résultant de cette double prise de vue est restituée au conducteur, dans ou à proximité de son champ de vision habituel de conduite.

Selon un mode de réalisation de l'invention, la prise de vue dans le domaine du proche infrarouge est effectuée par une caméra du type CCD (charge coupled device), et la prise de vue dans le domaine de l'ultraviolet est effectuée à l'aide d'une caméra CID (charge injection device).

Selon un mode de réalisation de l'invention, la prise de vue dans le domaine du proche infrarouge et de l'ultraviolet est assurée par deux caméras de technologie CCD sensibles dans ces deux domaines spectraux.

Selon un mode de réalisation de l'invention, les signaux captés par chaque caméra sont transmis à un séparateur de trame isolant les lignes impaires issues de la première caméra, et les lignes paires issues de la seconde caméra, de façon à conserver une première demi-image de la chaussée dans le domaine de l'ultraviolet, et une seconde demi-image de la chaussée dans le domaine du proche infrarouge.

Selon un mode de réalisation de l'invention, les signaux sélectionnés par le séparateur de trame sont traités par un mélangeur synchrone, permettant de délivrer en temps réel une trame complète, reconstituée à partir des lignes impaires issues de la première caméra et des lignes paires issues de la seconde caméra .

L'invention concerne également un dispositif pour la mise en oeuvre de ce procédé, caractérisé en ce qu'il comporte une caméra spéciale regroupant un objectif de réception, une lame séparatrice de rayons infrarouges et ultraviolets, un premier capteur C.I.D. sensible aux ultraviolets, un second capteur C.C.D. sensible aux infrarouges, et un mélangeur synchrone permettant de délivrer en temps réel une trame complète reconstituée à partir des lignes impaires issues du premier capteur C.I.D et des lignes paires issues du second capteur C.C.D.

Selon un mode de réalisation de l'invention, le dispositif pour la mise en oeuvre de ce procédé comporte une caméra spéciale regroupant un objectif de réception, une lame séparatrice de rayons infrarouges et ultraviolets, deux capteurs CCD amincis sensibles aux infrarouges et aux ultraviolets et un mélangeur synchrone, capable de reconstituer en temps réel une trame complète à partir des lignes impaires issues du premier capteur et des lignes paires issues du second capteur.

Selon un mode de réalisation de l'invention, la lame séparatrice de signaux est située entre l'objectif de réception et les capteurs ; cette lame est traversée en direction du premier capteur par les rayons de longueur d'onde supérieur à 0,7 $\mu$m et réfléchit les rayons appartenant à la bande 0,3 - 0,4 $\mu$m en direction du second capteur.

Selon un mode de réalisation de l'invention, ce dispositif comporte un filtre spectral, disposé entre la lame séparatrice et le second capteur, de façon à ne laisser passer que les rayons compris entre 0,7 et 1,2 $\mu$m.

L'invention concerne également un autre dispositif spécialement conçu pour la mise en oeuvre du procédé de l'invention ; ce dispositif est caractérisé en ce qu'il comporte une caméra unique du type C.I.D à large bande spectrale couvrant l'infrarouge et l'ultraviolet.

Selon un mode de réalisation de l'invention, la caméra à large bande spectrale est précédée de deux filtres transparents respectivement aux ultraviolets et aux proches infrarouges.

Selon un mode de réalisation de l'invention, l'image de la chaussée est restituée au conducteur sur un moniteur vidéo intégré dans le tableau de bord du véhicule.

Selon un mode de réalisation de l'invention, l'image de la chaussée est restituée au conducteur à l'aide d'un système de visualisation tête haute ou tête moyenne (en anglais Head Up Display [HUD]).

L'invention sera mieux comprise à la lecture de la description suivante d'un mode de réalisation particulier de celle-ci, en liaison avec les dessins annexés sur lesquels :

– la figure 1 représente schématiquement un premier dispositif conforme à l'invention,
– la figure 2 illustre graphiquement la formation d'une image composée, reconstituée par le mélangeur synchrone.
– la figure 3 se rapporte à un second mode de réalisation de l'invention, selon lequel la caméra utilisée comporte deux capteurs.
– la figure 4 se rapporte à un troisième mode de réalisation de l'invention, selon lequel on utilise une seule caméra à large bande spectrale,
– la figure 5 représente les bandes spectrales de sensibilité des différents types de capteur ou de caméra utilisables dans le cadre de l'invention,
– la figure 6 illustre les courbes de transmission des filtres ultraviolet et infrarouge mis en oeuvre dans le troisième mode de réalisation de l'invention.

L'invention a pour point de départ l'observation selon laquelle certaines matières, tels que les tissus synthétiques et certains cotons réfléchissent mieux les rayons lumineux du proche infrarouge (0,7 $\mu$m - 1,2 $\mu$m) que les rayons lumineux situés dans le spectre ultraviolet C non dangereux pour l'homme (300 à 400 nm). A l'inverse, d'autres matériaux, tels que le cuir, réfléchissent mieux les ultraviolets C que les rayons infrarouges.

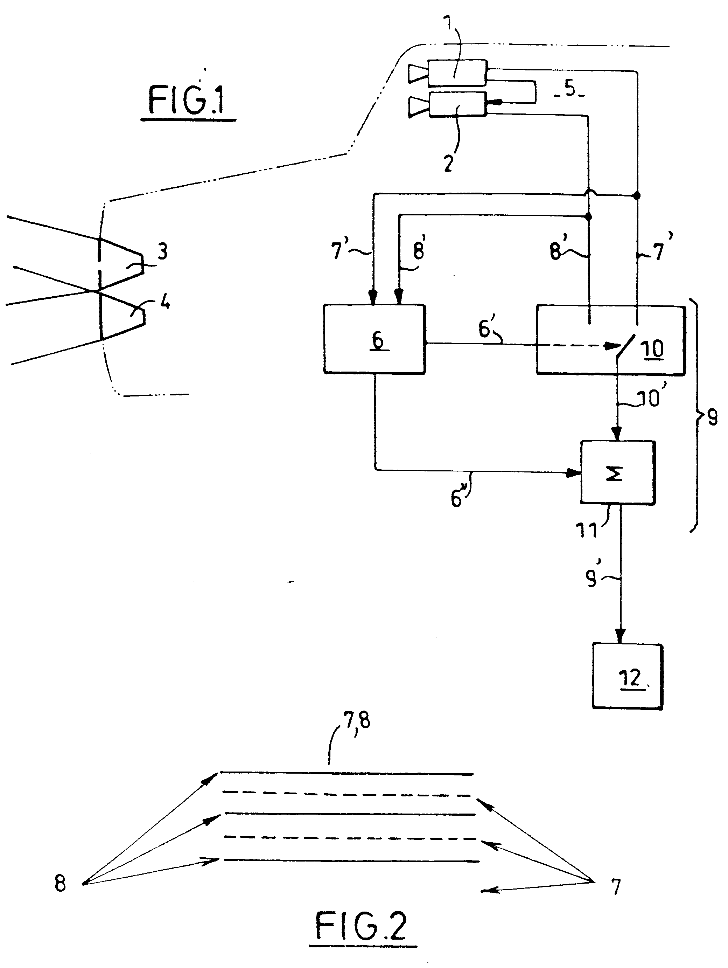

L'invention propose de reprendre simultanément une image de la chaussée, dans deux bandes spectrales distinctes. Avantageusement, cette double prise de vue peut être effectuée par deux caméras vidéo synchronisées. Cette solution est illustrée par la figure 1. La première caméra 1 pourra par exemple relever de la technologie C.C.D (capteur à coupleur de charge) et avoir une bande spectrale de sensibilité comprise entre 0,4 $\mu$m et 1,2 $\mu$m , de façon à capter une première image de la chaussée dans le proche infrarouge. La seconde caméra 2 sera alors du type C.I.D (capteur à injection de charge), de façon à capter une seconde image de la chaussée dans le spectre des ultraviolets C (0,3 $\mu$m- 0,4 $\mu$m). En variante, les deux caméras (1, 2) pourront comporter deux capteurs C.C.D "amincis", sensibles à la fois dans les spectres ultraviolet et infrarouge.

Conformément à l'invention les deux caméras 1, 2 sont associées à un séparateur de trame 6, apparaissant également sur la figure 1. Ce séparateur 6 a la charge de sélectionner les lignes paires 7 de l'image vidéo captée par la première caméra 1, et les lignes impaires 8 de l'image vidéo captée par la seconde caméra 2. L'ensemble des lignes 7, 8 sélectionnées par le séparateur de trame 6 est transmis à un mélangeur synchrone 9, capable de fournir en temps réel une image composite de la chaussée, composée des lignes impaires 8 captées dans l'ultraviolet, alternées avec des lignes paires 7 captées dans le proche infrarouge. Cette image vidéo reconstituée sera disponible au conducteur, soit sur un moniteur vidéo 12 intégré à son tableau de bord, soit à l'aide d'un système de visualisation tête haute laissant apparaître celle-ci sur le pare-brise.

Sur la figure 1 on a également représenté schématiquement le premier projecteur 3 éclairant la chaussée avec des rayons infrarouges, et le second projecteur 4 éclairant la chaussée avec des rayons ultraviolets, ainsi que le circuit de synchronisation 5 des caméras 1 et 2. Le mélangeur synchrone 9 comporte d'une part un commutateur 10 recevant directement les deux signaux vidéo 7', 8' provenant respectivement de la première et de la seconde caméra, ainsi qu'un signal de commande 6' issu du séparateur de trame 6 et d'autre part un sommateur 11 assurant la sommation de signaux de synchronisation communs 6″ issus du séparateur de trame 6 et du signal 10' délivré par le commutateur 10.

Le signal final 9' émis par le mélangeur 9 est un signal vidéo composite qui est ensuite transmis à un moniteur 12 de type CRT ("Cathode Ray Tube", soit en français écran à tube cathodique) ou du type LCD ("liquid cristal device"), ou encore à un système de projection tête haute HUD ("Head Up Display"). Dans tous les cas, le dispositif de l'invention assure la visualisation de l'ensemble des lignes d'une image complète à la cadence vidéo-télévision.

La figure 2 illustre de façon schématique la formation d'une image composée, formée simultanément dans les spectres ultraviolet et infrarouge. Sur ce schéma, relatif à une image vidéo standard répondant à la norme "C.C.I.R." (Comité Consultatif International de Radio-communication), on a représenté en traits interrompus les lignes paires 7 issues de la caméra C.C.D 1, reproduisant une demi-image de la route dans le spectre du proche infrarouge, et en traits pleins les lignes impaires 8 issues de la caméra C.I.D 2 reproduisant une demi-image de la route captée dans l'ultraviolet.

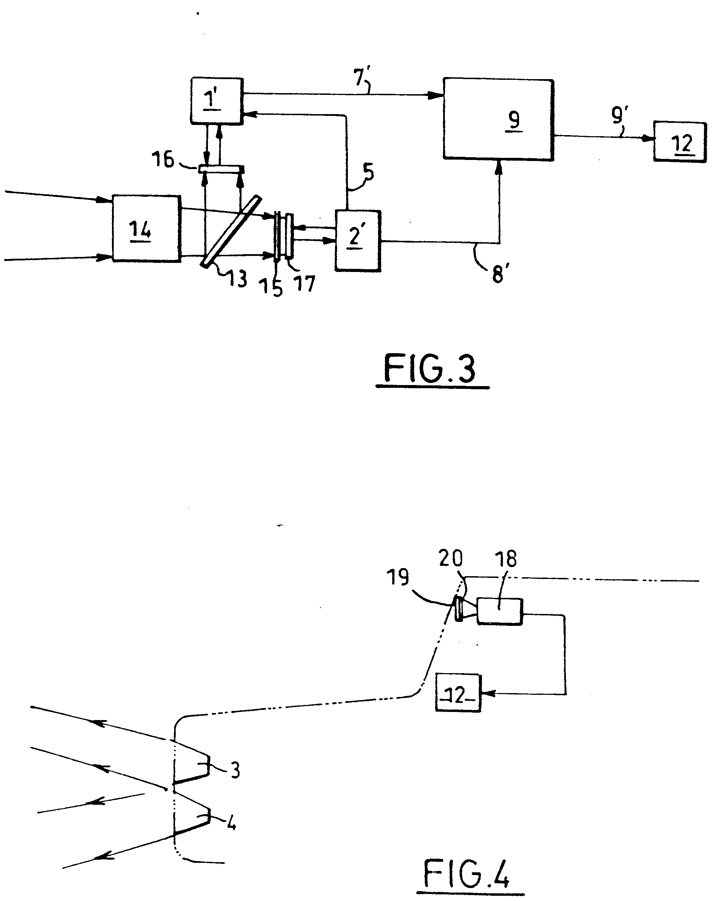

La figure 3 se rapporte à un second mode de réalisation de l'invention, selon lequel on met en oeuvre une lame séparatrice infrarouge et ultraviolet 13, disposée à la sortie d'un objectif de réception d'image 14. Selon ce second mode de réalisation, la prise de vue est assurée par deux capteurs vidéo 16, 17 de technologies respectives C.I.D et C.C.D ou par deux capteurs "CCD amincis", sensibles à la fois dans le spectre ultraviolet et dans le proche infrarouge. Ces deux capteurs 16, 17, l'objectif 14 et la lame séparatrice 13 seront avantageusement regroupés dans un ensemble de caméra qui n'est pas mis en évidence sur ce schéma pour des raisons de clarté. La lame séparatrice 13 peut par exemple assurer une réflexion totale dans la bande 0,3 - 0,4 $\mu$m, en direction du premier capteur 16, et transmettre la bande spectrale 0,4 $\mu$m - 1,2 $\mu$m au au second capteur 17, par l'intermédiaire d'un filtre spectral 15, (par exemple du type commercialisé sous la référence RG 715 de la marque SCHOTT), ne laissant passer que les longueurs d'ondes supérieures à 0,7 $\mu$. Ce filtre facilite notamment la réalisation de la lame séparatrice qui sera transparente aux longueurs d'ondes comprises entre 0,4 $\mu$m et 1,2 $\mu$m, et totalement réfléchissante aux ultraviolets.

On peut également envisager l'utilisation d'une lame séparatrice 13 totalement réfléchissante dans le proche infrarouge, et transparente entre 0,3 $\mu$m et 0,4 $\mu$m . Dans ce cas l'emplacement des capteurs 16 et 17 devra être inversé.

Ce schéma, mentionne également la présence des modules de pilotage et de traitement 1' et 2' des signaux issus des capteurs matriciels 16 et 17. On y retrouve le mélangeur synchrone 9, destinataire d'un signal vidéo ultraviolet 7' en provenance du premier capteur 16, et d'un signal vidéo infrarouge 8' en provenance du second capteur 17. Le mélangeur synchrone délivre un signal vidéo CCIR 9' dont la visualisation est assurée par le moniteur 12. Le fonctionnement de ce dispositif comparable à celui de la figure 1, puisque les capteurs 16 et 17 captent deux images superposables de la route, éclairées respectivement dans l'ultraviolet et le proche infrarouge. La sélection des lignes impaires 8 et paires 7 dans les images captées respectivement par le premier et le second capteur, la synchronisation des deux capteurs 1', 2' grâce au signal 5, et le mélange des deux demi-images, fournissent une image vidéo composite mixte, comme dans l'exemple de la figure 1.

Une troisième mode de réalisation de l'invention, illustré par la figure 4, consiste à éclairer la chaussée à l'aide de projecteurs longue portée 3, 4, rayonnant respectivement dans le domaine du proche infrarouge (0,7 $\mu$m - 1,2 $\mu$m) et de l'ultraviolet (0,3 $\mu$m -0,4 $\mu$m ), et à capter une image de la chaussée ainsi éclairée au moyen d'une caméra C.I.D unique 18 à très large bande spectrale de sensibilité : 0,2 $\mu$m - 1,2 $\mu$m . L'ensemble des détails réfléchissant dans le proche infrarouge et l'ultraviolet sont sélectionnés grâce à la disposition des filtres ultraviolet 19 et infrarouge 20 de façon à être captés par la caméra unique 18 et à être envoyés sur un moniteur 12 intégré au tableau de bord, ou projetés en vision tête haute sur le pare-brise.

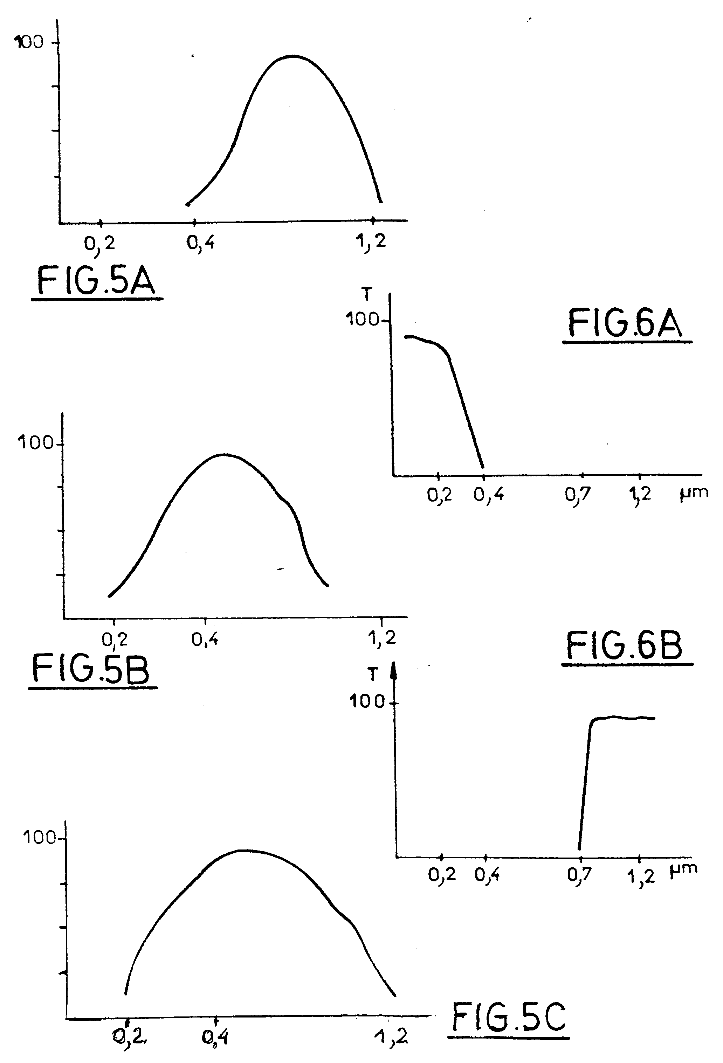

A titre d'exemple, on a représenté sur la figure 5A la bande spectrale de sensibilité d'un capteur C.C.D, sur la figure 5B celle d'un capteur C.I.D, et sur la figure 5C celle d'un capteur C.I.D. large bande, ces trois capteurs étant utilisables conformément à l'invention.

A titre d'exemple également, les graphes des figures 6 A et 6 B reproduisent les courbes de transmission de filtres ultraviolets et infrarouges utilisables conformément à la première variante de l'invention.

Selon les trois exemples de réalisation décrits, l'image perçue par le conducteur comporte des détails captés grâce à l'éclairage ultraviolet, ainsi que des détails captés grâce à l'éclairage infrarouge. Le procédé de l'invention est relativement simple à mettre en application et les coûts s'annoncent raisonnables pour l'amélioration de la vision de nuit obtenue. On peut noter à ce sujet que les techniques de traitement d'images multispectracles mises en oeuvre dans les domaines militaires et spatiaux sont beaucoup plus lourds à mettre en oeuvre, car ils nécessitent l'adaptation d'un matériel informatique plus conséquent.

## Revendications

[1] Procédé d'amélioration de la vision automobile de nuit consistant à éclairer la route et les objets qui s'y trouvent à l'aide de deux projecteurs longue portée (3, 4) émettant des rayons lumineux de longueurs d'ondes déterminées, et à capter une image de la chaussée éclairée par ces rayons au moyen d'un système de prise de vue, caractérisé en ce que les deux projecteurs (3, 4) éclairent respectivement dans les domaines du proche infrarouge et de l'ultraviolet, en ce que la prise de vue est également effectuée à l'intérieur de bandes spectrales couvrant le proche infrarouge et l'ultraviolet, et en ce que l'image de nuit combinée résultant de cette double prise de vue est restituée au conducteur dans ou à proximité de son champ de vision habituel de conduite.

[2] Procédé d'amélioration de la vision de nuit selon la revendication 1 caractérisé en ce que la prise de vue dans le domaine du proche infrarouge est assurée par une première caméra (1) de technologie C.C.D (1), et en ce que la prise de vue dans le domaine de l'ultraviolet est assurée par une seconde caméra (2) de technologie C.I.D.

[3] Procédé d'amélioration de la vision de nuit selon la revendication 1, caractérisé en ce que la prise de vue dans le domaine du proche infrarouge et de l'ultra violet est assurée par deux caméras de technologie CCD sensibles dans ces deux domaines spectraux.

[4] Procédé d'amélioration de la vision de nuit selon les revendications 2 ou 3, caractérisée en ce que les signaux (7', 8') captés par chaque caméra (1, 2) sont transmis à un séparateur de trame (6) isolant les lignes impaires (7) issues de la première caméra (1) et les lignes paires (8) issues de la seconde caméra (2), de façon à conserver une première demi-image de la chaussée dans le domaine de l'ultraviolet, et une seconde demi-image de la chaussée dans le domaine du proche infrarouge.

[5] Procédé d'amélioration de la vision de nuit selon la revendication 4, caractérisé en ce que les signaux (7', 8') sélectionnés par le séparateur de trame (6) sont traités par un mélangeur synchrone (9) permettant de délivrer en temps réel une trame complète (7, 8) reconstituée à partir des lignes impaires (7) issues de la caméra (1) et des lignes paires (8) issues de la seconde caméra (2).

[6] Dispositif d'amélioration de la vision de nuit spécialement conçu pour la mise en oeuvre du procédé conforme à la revendication 1, caractérisé en ce qu'il comporte une caméra spéciale regroupant un objectif de réception (14), une lame séparatrice de rayons infrarouges et ultraviolet (13), un premier capteur C.I.D (16), sensible aux ultraviolets, un capteur C.C.D (17) sensible aux infrarouges, et un mélangeur synchrone (9), capable de reconstituer en temps réel une trame complète à partir des lignes impaires (7) issues du capteur C.I.D (16) et des lignes paires (8) issues du capteur C.C.D (17).

[7] Dispositif d'amélioration de la vision de nuit spécialement conçu pour la mise en oeuvre du procédé conforme à la revendication 1, caractérisé en ce qu'il comporte une caméra spéciale regroupant un objectif de réception ( 14), une lame séparatrice de rayons infrarouges et ultraviolets (13) deux capteurs CCD "amincis", (16, 17) sensibles aux infrarouges et aux ultraviolets, et un mélangeur synchrome (9), capable de reconstituer en temps réel une trame complète à partir des lignes impaires (7) issues du premier capteur (16) et des lignes paires issues du second capteur ( 17).

[8] Dispositif d'amélioration de la vision de nuit selon les revendications 6 ou 7, caractérisé en ce que la lame séparatrice des signaux est située entre l'objectif de réception (14) et les capteurs (16, 17), en ce qu'elle est traversée en direction du second capteur (17) par les rayons de longueur d'onde supérieure à 0,7 $\mu$m , et en ce qu'elle réfléchit les rayons de longueur d'onde comprise entre 0,3 $\mu$m et 0,4 $\mu$m en direction du premier capteur ( 16).

[9] Dispositif d'amélioration de la vision de nuit selon la revendication 8, caractérisé en ce qu'il comporte un filtre spectral (15) disposé entre la lame séparatrice (13) et lesecond capteur (17), de façon à ne laisser passer que les rayons compris entre 0,7 et 1,2 $\mu$m.

[10] Dispositif d'amélioration de la vision de nuit spécialement conçu pour la mise en oeuvre du procédé conforme selon la revendication 1, caractérisé en ce qu'il comporte une caméra unique (18) du type C.I.D. à large bande spectrale sensible à l'infrarouge et à l'ultraviolet.

[11] Dispositif d'amélioration de la vision de nuit selon la revendication 10, caractérisé en ce que la caméra C.I.D à large bande spectrale ( 18) est précédée de deux filtres (19, 20) respectivement transparents aux ultraviolets et aux proches infrarouges.

[12] Dispositif d'amélioration de la vision de nuit selon l'une quelconque des revendications 6 à 11, caractérisé en ce que l'image de la chaussée est restituée au conducteur sur un moniteur vidéo (12) intégré au tableau de bord du véhicule.

[13] Dispositif d'amélioration de la vision de nuit selon l'une quelconque des revendications 6 à 11, caractérisé en ce que l'image de la chaussée est restituée au conducteur à l'aide d'un système de visualisation tête haute.

[14] Procédé d'amélioration de la vision de nuit selon l'une quelconque des revendications 1 à 5, caractérisé en ce que l'image de la chaussée est restituée au conducteur sur un moniteur vidéo (12) intégré au tableau de bord du véhicule.

[15] Procédé d'amélioration de la vision de nuit selon l'une quelconque des revendications 1 à 5, caractérisé en ce que l'image de la route est restituée au conducteur à l'aide d'un système de visualisation tête haute.

FIG.1

FIG.2

FIG.3

FIG.4

FIG.5A

FIG.6A

FIG.5B

FIG.6B

FIG.5C

**Office européen des brevets**

# RAPPORT DE RECHERCHE EUROPEENNE

Numero de la demande

EP 92 40 0627

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 692 798 (SEKO)<br>* abrégé; figure 14 *<br>--- | 1 | B60Q1/14<br>B60Q1/52 |
| A | FR-A-2 621 872 (BONINO G. ET AL)<br>* page 1, ligne 16 - ligne 26; figure 1 *<br>--- | 1 | |
| A | US-A-4 985 816 (SEKO)<br>* abrégé; figures 6,8 *<br>----- | 1 | |

### DOMAINES TECHNIQUES RECHERCHES (Int. Cl.5)

B60Q

Le présent rapport a été établi pour toutes les revendications

| Lieu de la recherche | Date d'achèvement de la recherche | Examinateur |
|---|---|---|
| LA HAYE | 06 MAI 1992 | Onillon C.G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0403)